# EUROPÄISCHE PATENTSCHRIFT

(11) **EP 2 167 836 B1**
(45) Veröffentlichungstag und Bekanntmachung des Hinweises auf die Patenterteilung: **27.04.2011**
(21) Anmeldenummer: 08760062.3
(22) Anmeldetag: 27.05.2008
(51) Int. Cl.: F16F 9/05

(54) **LUFTFEDER- UND DÄMPFEREINHEIT MIT DRUCKENTLASTETER ROLLFALTE**
AIR SPRING AND DAMPER UNIT WITH PRESSURE-RELIEVED ROLL FOLD
UNITE DE SUSPENSION PNEUMATIQUE ET D'AMORTISSEUR AVEC PLI ROULANT SANS PRESSION

(30) Priorität: 18.07.2007 DE 102007033303
(43) Veröffentlichungstag der Anmeldung: 31.03.2010
(73) Patentinhaber: Continental Teves AG & Co. oHG, 60488 Frankfurt (DE)
(72) Erfinder: GLEU, Jens-Uwe, 30855 Langenhagen (DE)
(74) Vertreter: Finger, Karsten
(86) Internationale Anmeldenummer: PCT/EP2008/056464
(87) Internationale Veröffentlichungsnummer: WO 2009/010327

(56) Entgegenhaltungen:
- EP-A- 1 369 267
- EP-A- 1 715 214
- EP-A- 1 715 215
- EP-A- 1 837 548
- DE-A1- 3 501 651
- DE-A1-102004 059 764
- DE-B3- 10 311 263
- DE-C1- 10 224 442

## Beschreibung

Die Erfindung betrifft eine Luftfeder- und Dämpfereinheit, insbesondere für Fahrwerke von Fahrzeugen, welche mindestens zwei mit Druckluft gefüllte Arbeitsräume aufweist, die jeweils mindestens teilweise durch bewegliche Wände in Form von Rollbälgen begrenzt werden, bei welcher die Rollbälge unter Bildung einer Rollfalte mindestens teilweise auf den Konturen rotationssymmetrischer Körper abrollen und bei welcher die Arbeitsräume untereinander über durchströmbare Drosselventile verbunden sind.

Luftfeder- und Dämpfereinheiten dienen heute insbesondere in Personenkraftwagen als besonders komfortable Federungselemente und sorgen für ein angenehmes Fahrgefühl bei einer Federung, die je nach Straßenverhältnissen zwischen einem "weichen" und "harten" Federungsverhalten angepasst werden kann. Dies geschieht in der Regel durch steuerbare Ventile, wodurch die durch dissipative Strömungen zwischen den einzelnen Arbeitsräumen entstehende Dämpfung beeinflusst bzw. verändert wird.

Es verbleibt jedoch bisher gelegentlich ein dem Fachmann bekanntes so genanntes "Harshness-Problem", d.h. ein überlagertes, etwas raues, hartes Federungsverhalten bei Schwingungen höherer Frequenz und geringer Amplitude, das durch die Abhängigkeiten von den für Luftfeder- und Dämpfereinheiten gebräuchlichen Bauweisen, Materialien, Eigendämpfungen, Trägheiten etc. entsteht.

Bei Luftfeder- und Dämpfereinheiten ist diese überlagerte Rauhigkeit (Harshness) u.a. abhängig vom anliegenden Arbeitsdruck, mit denen die Rollbälge und die übrigen Materialien beaufschlagt werden. Bei hohem Druck verhält sich nämlich zum einen die Luft als Dämpfungsmedium eher wie ein Fluid und wird daher selbst empfindlich im Hinblick auf die Dämpfungsfähigkeit in den genannten Bereichen, zum anderen führt der auf die Rollbälge wirkende Druck auch hier zur Verhärtung des Materials und zur Veränderung der inneren Federung / Dämpfung, so dass das Federungsverhalten in den Harshness-Bereichen unangenehmer wird.

Die DE 103 11 263 B3 2004.07.29 zeigt eine Luftfeder mit Luftdämpfung, wobei zwei Arbeitskammern und drei Rollbälge vorgesehen sind. Der im Durchmesser größte Rollbalg bestimmt hierbei die Federrate der Luftfeder über den Federweg und ist angeordnet zwischen einem oberen und einem unteren topfförmigen Gehäuseteil. Die beiden weiteren und sich in ihrer wirksamen Federkraft kompensierenden Bälge sind zwischen dem unteren topfförmigen Gehäuseteil und einem Abrollrohr angeordnet, welches innerhalb des oberen topfförmigen Gehäuseteil befestigt ist und in den unteren topfförmigen Gehäuseteil hineinragt. Über Drosselbohrungen in den zylindrischen Wänden des Abrollrohres kann Luft zwischen beiden Arbeitsräumen strömen. Die beiden unteren spiegelbildlich angeordneten Bälge erlauben in dieser Ausbildung eine axiale Führung der Luftfeder, wodurch die Reibung während des Federhubes weitgehend reduziert wird. Bei diesem System wird jedoch beim Einfedern das Volumen beider Arbeitskammern verkleinert und beim Ausfedern wieder vergrößert. Durch das Verkleinern beider Volumina beim Einfedern steigt der Druck und damit die Gasdichte in beiden Arbeitskammern an, nicht aber der dynamischen Differenzdrucks an den Drosselventilen. Dies wiederum bewirkt nachteiligerweise einen auch bei höherem Druck nur geringfügig gesteigerte Dämpfungsarbeit, was das Harshness-Problem eher verstärkt.

Die DE 3436664 A1 offenbart eine Membran-Luftfeder, welche ebenfalls Federung und Dämpfung bereitstellt und zwei unterschiedlich große Arbeitskammern aufweist, die jeweils teilweise durch Rollbälge nach außen begrenzt sind. Die Rollbälge stützen sich und rollen dabei auf äußeren Zylinderflächen axial beweglicher und als Hohlkolben ausgebildeter Gehäuseteile ab. Die unterschiedlich großen Arbeitskammern sind durch eine mit Drosselöffnungen versehene Wand getrennt, Durch die Drosselöffnungen kann Luft von einer Arbeitskammer in die andere strömen, wobei die entstehende Dissipation die Dämpfungsarbeit erzeugt. Die Membran-Luftfeder ist jedoch in ihrer Grundkonstruktion, bei der die als Hohlkolben ausgebildeten Gehäuseteile mit einer in der Trennwand geführten zentralen Stange verbunden sind, mit erheblichen Reibungsverlusten in dieser Führung behaftet. Hierdurch wird eine Mindestkraft erforderlich, die erreicht werden muß, um das Feder-Dämpfer-System überhaupt anspringen zu lassen. Schwingungen hoher Frequenzen unterhalb einer solchen Mindestkraft werden daher ungedämpft und ungefedert übertragen, so dass bei einer solchen Ausführung im Hinblick auf die "Harshness" eher unbefriedigende Ergebnisse zu erwarten sind.

Insgesamt ist natürlich auch der im Rollbalg vorhandene relative Arbeitsdruck maßgeblich für etwaige Komfortnachteile, da dicke und feste und damit unkomfortablere Bälge eingesetzt werden müssen, um einen hohen Arbeitsdruck tragen zu können. Auch verschlechtert sich das Komfortverhalten an sich durch die bei erhöhtem Arbeitsdruck erhöhte Steifigkeit. Ebenfalls müssen die Anschlüsse an Kolben und Deckel einer Luftfeder oder eines Luftdämpfers dem Arbeitsdruck standhalten. Durch Senken des relativen Arbeitsdruckes werden die Festigkeitsanforderungen an die Bälge also geringer, wodurch dünnere und komfortablere Bälge eingesetzt werden können. Ein geringerer Arbeitsdruck vermindert natürlich auch die Diffusion des Arbeitsmediums nach außen.

Die EP 1 715 214 A1 offenbart einen einteiligen und als Doppelrollbalg ausgebildeten Schlauchrollbalg für pneumatische oder hydropneumatische Federungs- bzw. Dämpfungselemente mit zwei von einem Mittelteil ausgehenden und zueinander gerichteten Rollfalten, bei denen der zwischen den Rollfalten und einem ungebenden Rohrstück liegende Raum mit einem Druckmedium beaufschlagbar ist, welches günstigerweise dasselbe Medium ist, dass in den Arbeitsräumen vorhanden ist, also mit Luft als kompressiblem Medium. Dieser vom Druckmedium erzeugte Gegendruck, verringert dann den relativ an diesen zwei Rollfalten/Bälgen anliegenden Arbeitsdruck. Nachteilig dabei ist es, dass die Beaufschlagung des zwischen den Rollfalten und einem umgebenden Rohrstück liegenden Raumes mit einem kontrolliert komprimierten Druckmedium ist eine komplizierte und teure Regelungsaufgabe darstellt. Einerseits steht das komprimierte Druckmedium meist nicht unbegrenzt zur Verfügung und andererseits muß mittels Sensorik, Regelungsbauteilen und Meß- und Steuerelektronik der Druck des Druckmediums möglichst konstant kontrolliert und dicht an den maximal möglichen Grenzen gehalten werden, damit das Verfahren überhaupt Sinn macht. Die hierzu erforderlichen Steuer- und Kontrolleinrichtungen müssen dann auch immer im Fahrzeug vorgehalten werden, d.h. eingebaut sein. Bei Regelvorgängen sind oft Verluste an Druckmedium unvermeidlich, was die Versorgung möglicherweise nicht leisten kann.

Der Prozess der Beaufschlagung des Zwischenvolumens mit dem Druckmedium an sich muss außerdem sicherstellen, dass zu keinem Zeitpunkt das Druckniveau des Druckmediums größer ist als das Druckniveau in den Arbeitsräumen, da dies zu einem Umstülpen des entsprechenden Balges in eine Form entgegengesetzt zur ursprünglich ausgebildeten Rollfaltenform führen würde. Darüber hinaus bestehen weiterhin hohe Dichtigkeitsanforderungen an die Bälge, die wiederum dazu führen, dass entsprechend dicke Gummischichten bzw. hochdichte Gummimischungen eingesetzt werden müssen, was beides, wie bereits dargestellt, den Komfort nachteilig beeinflusst. Würden diesen Dichtigkeitsanforderungen nämlich nicht bereitgestellt, würde das Arbeitsmedium in das Druckmedium diffundieren und einen ungewünschten Druckausgleich schaffen.

Für die Erfindung bestand also die Aufgabe, eine Luftfeder- und Dämpfereinheit bereitzustellen, die auch bei hohen Arbeitsdrücken Schwingungen höherer Frequenz und geringer Amplitude bedämpfen kann, bei der das Harshness-Verhalten auf ein Minimum reduziert ist und bei der mit dünnen Bälgen hohe Tragfähigkeiten erreicht werden.

Gelöst wird diese Aufgabe durch die Merkmale des Hauptanspruchs. Weitere vorteilhafte Ausbildungen sind in den Unteransprüchen offenbart.

Dabei ist der rückseitige und dem jeweiligen Arbeitsraum abgewandte Bereich der Rollfalte mit einem Druckmedium beaufschlagt, welches im Wesentlichen inkompressibel ist und damit als "Stützmedium" dient. Damit wird die Druckdifferenz zum durch den Rollbalg abgedichteten Arbeitsraum mindestens im Bereich der hoch beanspruchten Rollfalte stark verringert und in Form einer "Selbstregelung" an unterschiedliche Druckdifferenzen anpassbar, wie im Weiteren ausgeführt. Der Balg wird somit geringer belastet und innere Spannungen im Material reduziert. Dies führt dann direkt zu der Möglichkeit, dünnere Bälge einzusetzen und damit zu einer Harshness-Reduktion und zu einer deutlichen Komfortverbesserung.

Eine vorteilhafte Weiterbildung besteht darin, dass das Stützmedium ein Gemisch aus mehreren inkompressiblen Medien, also im Wesentlichen aus mehreren Fluiden ist. Dadurch kann die Kompressibilität gezielt beeinflusst werden, um so die technischen Eigenschaften beim Druckentlastungsprozeß zu optimieren. Dabei besteht eine vorteilhafte Ausbildung darin, dass das Stützmedium ein Glykol-Wasser-Gemisch ist. Durch eine solche Ausbildung des Stützmediums als Glykol-Wasser-Mischung sind eine hinreichende Temperaturresistenz und Verträglichkeit mit den eingesetzten Balgmaterialien und ein Korrosionsschutz der Anbauteile von Innen gegeben.

Eine vorteilhafte Weiterbildung besteht darin, dass das Stützmedium auch Volumenanteile eines kompressiblen Mediums, also z. B eines gelösten Gases aufweist. Die Kontrolle einer idealen Inkompressibilität kann dadurch verbessert werden. Durch kontrolliertes Einbringen von kompressiblen Anteilen in das Stützmedium, etwa in Form einer Luftblase, kann das Stützmedium auf eine den Anwendungsfall angepasste Inkompressibilität eingestellt werden.

Eine vorteilhafte Weiterbildung besteht darin, dass das Stützmedium aus einem Gemisch von Medien mit unterschiedlichen Kompressions-Moduli ist, welches unter Druck einen Phasenübergang durchläuft. Auch dadurch ist eine Einflussnahme auf die Ausprägung des Kompressionsverhaltens des Stützmediums erreichbar. Im relevanten Druck-TemperaturBereich kann dann z. B. ein Übergang von einer flüssigen in eine gasförmige Phase erfolgen.

Eine vorteilhafte Weiterbildung besteht darin, dass das Stützmedium als Schmier- oder Gleitmittel ausgebildet ist. Durch Senkung der Reibung zwischen Anlageflächen und Balg wird der Abrollkomfort gesteigert wird. In Lebensdauerversuchen hat sich zudem ein positives Abriebverhalten der an den Abrollflächen abrollenden Gummischichten der Bälge gezeigt.

Im Hinblick auf das Korrosionsverhalten der Luftfederung besteht eine vorteilhafte Weiterbildung darin, dass das Stützmedium als Korrosionsschutzmittel ausgebildet ist. Auch dadurch verlängert sich selbst bei verringerten Wartungsintervallen die Lebensdauer.

Eine vorteilhafte Weiterbildung besteht darin, dass bei mit Druckluft beaufschlagten Arbeitsräumen das Stützmedium im Befüllzustand drucklos ist. Dadurch ergibt sich der bei Betrieb sich einstellende Entlastungsdruck im Stützmedium durch die elastische Balglängung bei weiterer Kompression der Druckluft in den Arbeitsräumen als eine Gleichgewichtsreaktion. Der Entlastungsdruck ändert sich also selbstregelnd ohne weitere Regelungs- oder Steuervorgänge.

Eine vorteilhafte Weiterbildung besteht darin, dass beide Arbeitsräume innerhalb eines gemeinsamen topfförmigen rotationssymmetrischen Gehäuses übereinander angeordnet und durch einen innerhalb des rotationssymmetrischen Gehäuses axial beweglichen und am Kopfende einer Kolbenstange befindlichen rotationssymmetrischen Kolben getrennt sind, wobei - jeweils abdichtend - zwischen Kolben und rotationssymmetrischem Gehäuse ein zur Kolbenvorderseite geöffneter erster Rollbalg sowie ein zur Kolbenrückseite geöffneter zweiter Rollbalg angeordnet ist, und wobei der Bereich zwischen den Rollfalten der Rollbälge mit Stützmedium beaufschlagbar ist.

Bei einer solchen Ausbildung sind also ein Arbeitsraum auf der Kolbenvorderseite und mindestens ein weiterer Arbeitsraum auf der Kolbenrückseite angeordnet, deren Rollfalten sich spiegelbildlich gegenüberliegen. Der weitere Arbeitsraum umgibt dann die Kolbenstange über eine Teillänge.

Eine solche Luftfeder- und Dämpfereinheit weist auch bei hohen Belastungen eine geringe Baugröße auf und vermeidet durch das Abtrennen und Dichten des Kolbens und der Kolbenstange jeweils durch Rollbälge innerhalb des rotationssymmetrischen Gehäuses jede merkbare Reibung und sorgt für ein sofortiges und komfortables "Anspringen" ohne Neigung zum Harshness-Verhalten.

Eine weitere vorteilhafte Weiterbildung besteht darin, dass zwischen Kolbenstange und rotationssymmetrischem Gehäuse ein vom Kolben beabstandeter dritter zur Kolbenrückseite geöffneter Rollbalg angeordnet ist. Der Kolben und die Kolbenstange werden dabei jeweils durch Rollbälge innerhalb des Gehäuses abgedichtet und geführt.

Ein Ausbildung mit drei auf solche Art angeordneten Bälgen erlaubt trotz der zur Reduzierung des "Harshness-Verhalten" erfolgenden Befüllung des Raumes zwischen den Rollfalten mit Stützmedium und der damit induzierten "weichen" Kennung der Rollfalten eine präzise und sichere Führung des Kolbens und der Kolbenstange, also des z.B. mit dem Fahrwerk verbundenen Teils der Luftfeder- und Dämpfereinheit innerhalb des topfförmigen zylindrischen Gehäuses, was dann mit der Karosserie verbunden ist. Hierdurch lassen sich auch auf die Luftfeder- und Dämpfereinheit einwirkende Querkräfte, d.h. Fahrwerkskräfte normal zur Achse der Luftfeder- und Dämpfereinheit übertragen. , was mit üblichen Luftfeder-Dämpfungssystemen nur bedingt möglich ist.

Dabei sind die Außenfläche des Kolbens und der Kolbenstange und die Innenfläche des Gehäuses jeweils mindestens teilweise als rotationssymmetrische Abrollkonturen ausgebildet.

Eine weitere vorteilhafte Weiterbildung besteht darin, dass das topfförmige rotationssymmetrische Gehäuse vorzugsweise im oberen Bereich karosseriefest und die Kolbenstange im unteren Bereich an einer Radaufhängung befestigbar sind. Hierdurch liegt insbesondere bei der Verwendung in Fahrwerken von Personenkraftwagen die Luftfeder- und Dämpfereinheit geschützt im Radhaus und paßt in der Vielzahl der Einbaufälle hervorragend in den vorgesehenen Bauraum (Package).

Bei Einsatz des erfindungsgemäß inkompressiblen Stützmediums, also eines Mediums mit stark abweichender Kompressibilität im Vergleich zu dem im Inneren des Rollbalges befindlichen Arbeitsmedium (Luft), ergibt sich der bei Betrieb sich einstellende Entlastungsdruck durch das Zusammenspiel von elastischer Balglängung bei Befüllung der Arbeitsräume und dem inkompressiblen Stützmedium in dem rückseitigen und dem jeweiligen Arbeitsraum abgewandte Bereich der Rollfalte (Zwischenvolumen).

Das Medium wird zunächst drucklos in das Zwischenvolumen eingebracht.
Der sich im Medium einstellende hydrostatische Entlastungsdruck mit den o.g. Vorteilen entsteht durch das Anlegen der sich elastisch aufeinander zubewegenden Rollfalten an das Stützmedium, was aufgrund der kontrollierten Inkompressibilität den erforderlichen Entlastungsdruck als eine Gleichgewichtsreaktion mit den damit verbundenen Komfortvorteilen aufbaut.

Damit stellt sich der Entlastungsdruck pₑ mit einer nahezu konstanten Druckdifferenz zum zeitlich veränderlichen Druck in den Arbeitsräumen p(t) ein: pₑ= p(t) - p₀. Wird der Druck in den Arbeitsräumen p(t) geändert, ändert sich der Entlastungsdruck entsprechend automatisch ohne weitere Regelungs- oder Steuervorgänge.

Die eingestellte Druckdifferenz p₀ wird durch den Befüllzeitpunkt des Zwischenvolumens mit dem Stützmedium festgelegt. Werden die Arbeitsräume mit einem Anfangsdruck pₛₜₐᵣₜ= po befüllt, der z.B. kleiner als der Arbeitsdruck p(t)=p_{KO} ist und anschließend das inkompressible Stützmedium drucklos und blasenfrei eingefüllt, dann bleibt diese Druckdifferenz Δp(t) beim weiteren Befüllen der Arbeitsräume bis zum Betriebsdruck genauso erhalten wie bei einer Änderung der Arbeitsdrücke durch Ein- und Ausfedervorgänge Δpa=p₀-0, Δp_{b}=p_{KO}-(p_{KO}-p₀)= Δpₐ (a .. Modulzustand nach druckloser Befüllung mit dem Stützmedium und b .. anderer Modulzustand). Dadurch gestaltet sich der Befüllvorgang sehr einfach. Ebenfalls kann dadurch kann der vorgegebene und sich selbstständig einstellende Entlastungsdruck sehr dicht an das Arbeitsdruckniveau herangeführt werden, was die Bälge nahezu drucklos arbeiten lassen kann mit den damit verbundenen extrem ausgenutzen Komfortvorteilen.

Während des Modulbetriebes entstehen Druckdifferenzen Δp₁₂=|p₁(t)-p₂(t)| zwischen den beiden Arbeitsräumen "1" und "2". Diese Druckdifferenzen können das Niveau von p₀ überschreiten (Δp₁₂>p0), insbesondere wenn p₀ aus Komfortgründen sehr klein gewählt wird.

Die erfindungsgemäße Nutzung/Ausbildung eines inkompressiblen Stützmediums führt in diesem Fall dazu, dass sich für Δp₁₂<=p₀ zunächst durch die mit den unterschiedlichen Drücken einstellende Balglängung dazu führt, dass sich die vorhandene Entlastungsdruckdifferenz p₀ von dem einen zum anderen Balg verlagert und der Entlastungsdruck pₑ bis zur Grenze Δp₁₂<=p₀ selbst unverändert bleibt.
Für größere Druckdifferenzen Δp₁₂>p₀ ist dann der Druck in dem einen Arbeitsraum ₖₗₑᵢₙp = min(p₁,p₂) kleiner als der ursprüngliche Entlastungsdruck ₖₗₑᵢₙp<pₑ. Deshalb kann der Entlastungsdruck pₑ, der sich ja als Gleichgewichtsreaktion einstellt, nicht mehr aufrechterhalten werden. Er sinkt auf den kleineren der beiden Arbeitsdrücke: pₑ←ₖₗₑᵢₙp. Durch die damit verbundene Verringerung des Differenzdruckes am anderen Balg _{groß}Δp= max(p₁,p₂)-ₖₗₑᵢₙp wird der dann entsprechend mehr gedehnt. Diese Dehnung verdrängt das zugehörige Volumen von Stützmedium aus dem Zwischenraum. Da der Differenzdruck am Balg des Arbeitraumes mit dem kleineren Momentandruck Null ist (ₖₗₑᵢₙΔp=ₖₗₑᵢₙp pₑ), weicht der Balg um das verdrängte Volumen des Stützmediums aus.

Dieses Ausweichen entsteht, indem sich die Balgwand von der Anlagefläche, meist von der Außenführung löst. Jedoch sind die Größenordnungen des verdrängten Volumens sehr klein gegenüber den Volumina der Arbeitsräume. Dadurch findet nur wenig Ablösung von der Balganlagefläche statt, ja es ist sogar so, dass aufgrund der Kleinheit des verdrängten Volumens des Stützmediums und dessen Inkompressibilität die Rollfalte stets ausgebildet bleibt. Ein Zusammenfallen bzw. Verknittern der Rollfalte würde soviel Volumenänderung im Zwischenraum produzieren, dass dies wegen der Inkompressibilität des Stützmediums nicht stattfinden kann. Dies erklärt auch die Resistenz dieser Anordnung gegenüber radialen Verzwängungen der Rollfalten.

Obige Betrachtungen erläutern, warum die Rollbälge/Dämpfbälge nur noch eine Festigkeit zum Tragen des maximal durch Dämpfung auftretenden Differenzdruckes Δp₁₂ aufweisen müssen. Somit können die Bälge extrem dünn hergestellt werden und somit mit den besten Komforteigenschaften ausgestattet werden.

Während des Modulbetriebes treten Erwärmungen und Abkühlungen mit den damit verbundenen thermischen Volumendehnungen des Stützmediums auf. Diese thermischen Volumendehnungen werden analog toleriert wie die zusätzliche Balgdehnung bei Überschreitung des Differenzdruckes Δp₁₂ über die Entlastungsdruckdifferenz p₀.

Die Dichtigkeitsanforderungen an die Dämpfbälge und deren Verbindungen zu den Anbauteilen sinken. Die Schnittstellen des Zwischenvolumens zum Umgebungsdruck sind mit flüssigem Stützmedium gefüllt, das sich leichter abdichten lässt als flüchtige Luft. Die Schnittstellen der Arbeitsdrücke zum Stützmedium werden nur noch maximal mit dem größten je auftretenden Differenzdruck Δp₁₂ belastet und verlaufen vom Arbeitsmedium in ein flüssiges Stützmedium. Damit werden durch Dichtigkeitsanforderungen keine zusätzlichen Auflagen an die Balgkonstruktion vorgegeben, die sich üblicherweise nachteilig auf den Komfort auswirken.

Die Klemmverbindungen der Dämpfbälge können weniger fest und damit billiger sowie bei kleinerem Bauraum dargestellt werden.

Elastomerbälge, die lange Zeit unter Innendruck stehen und/oder dabei dynamisch bewegt bzw. hohen Temperaturen ausgesetzt werden, erfahren üblicherweise eine Balglängung über ihre Lebensdauer. Ein besonderer Vorteil der Erfindung besteht daher darin, dass diese Balglängung durch den erfindungsgemäßen Einsatz eines kontrolliert inkompressiblen Stützmediums verhindert wird, da eine Balglängung nur bis zum Zustand p_{1|2}=pₑ stattfinden kann.

Wenn die durch den Befüllvorgang aufgebrachte Vordehnung der Dämpfbälge durch Balglängung aufgebraucht ist, kommt die Balglängung wegen fehlendem Antrieb zum Stillstand. Eine elastische Balglängung über Hub zufolge der Druckänderung beim Ein- und Ausfedern tritt nicht mehr auf. Damit ändert sich der Abstand der Rollfalten der Dämpfbälge beim dämpfungsfreien Ein- und Ausfedern nicht. Eine Änderung des Rollfaltenabstandes der Dämpfbälge tritt nur noch durch den Anteil der Balglängung auf, der zufolge der Überschreitung (Δp₁₂ p₀) der Druckdifferenz Δp₁₂ über die initiale Entlastungsdruckdifferenz p₀=p_{1|2} pₑ entsteht. Bei geeigneter Wahl von p₀ ist das sehr wenig. Bis zu einem Differenzdruck von Δp₁₂<p₀ längen und verkürzen sich zwar die Dämpfbälge, der Rollfaltenabstand bleibt wegen der gleichen elastischen Eigenschaften der Bälge jedoch konstant. Sollten sich die Rollfalten der Dämpfhälge kurzzeitig dennoch berühren, dann geschieht dies mit einem kleinen Kontaktdruck und mit Schmierung durch das Stützmedium. Eine Zerstörung der Bälge in diesem Betriebszustand wie dies früher zwangsläufig der Falls war, tritt nicht mehr auf. Deshalb kann der konstruktive Abstand zwischen den Rollfalten der Dämpfbälge sehr klein gewählt werden.

Der Befüllvorgang des Zwischenvolumens mit Stützmedium ist wegen der möglicherweise gewünschten Entlüftung nicht ganz einfach. Normalerweise begegnet man dieser Aufgabe mit entsprechend eingebrachten Entlüftungskanälen. Erfindungsgemäß kann dieser Vorgang aber auch durch Drucksteuerung zusammen mit mehreren Befüllvorgangsphasen und einem Ausgleichsgefäß voll Stützmedium stark vereinfacht werden.

Es können z. B die Arbeitsräume zunächst mit einem höheren Druck als p₀ vorgefüllt werden, z.B. mit ₘₐₓΔp₁₂. Dadurch legen sich die Dämpfbälge fest an die Abrollflächen an und es verbleiben keine Lufteinschlüsse. Anschließend wird das Zwischenvolumen entweder einfach nur drucklos volllaufen gelassen oder mit einem Druck pₑ>ₘₐₓΔp₁₂ zwangsbefüllt. Dadurch werden evtl. vorhandene Lufteinschlüsse in Ecken des Zwischenvolumenens herausgedrückt. Denkbar ist auch ein Verzicht auf eine Vorbefüllung der Arbeitsräume mit Luft und ein alleiniges Einbringen von überschüssigem Stützmedium. Jedenfalls soll das Stützmedium aktiv in die Räume zwischen Balg und Anlagefläche gedrückt werden um dort und woanders befindliche Luft herauszudrücken. Jedenfalls soll ebenfalls im Anschluß daran das Stützmedium druckfrei gemacht werden und das ausströmende Stützmedium in ein luftdicht angeschlossenes Ausgleichsbehältnis abgeleitet werden. Dieser Vorgang kann wiederholt werden, solange bis keine Luftblasen mehr herausgedrückt werden. Zuletzt wird der Fülldruck der Arbeitsräume auf das gewünschte Niveau p₀ gebracht und das Stützmedium soll dabei ungehindert ohne Falschluft entweichen oder nachströmen können. Zum Abschluss wird der Zwischenraum verschlossen.

Durch die zeitliche Abfolge von verschiedenen Druckzuständen in den Arbeitsräumen und dem Zwischenraum kombiniert mit einem falschluftfreien Nachströmen des Stützmediums aus oder in ein kommunizierenden Ausgleichsbehälter wird die luftblasenfreie Befüllung des Zwischenvolumens mit Stützmedium sicher und einfach dargestellt. Der Zustand der Luftfederdämpfereinheit für einen Innendruck von p₀ und einem druckfreien mit Stützmedium gefülltem Zwischenvolumen stellt für den Volumeninhalt des Zwischenvolumens ein Minimum dar. Deshalb kann bei einer Luftfederdämpfereinheit in diesem Zustand der Innendruck abgelassen werden, die Rollfalten bleiben wegen der Inkompressibilität des Stützmediums weiter in Form. Darum kann ein im Zwischenvolumen mit inkompressiblem Stützmedium befülltes Modul ohne Innendruck in den Arbeitsräumen (Restdruckhaklteventil) transportiert bzw. gelagert werden.

Anhand eines Ausführungsbeispieles soll die Erfindung näher erläutert werden.

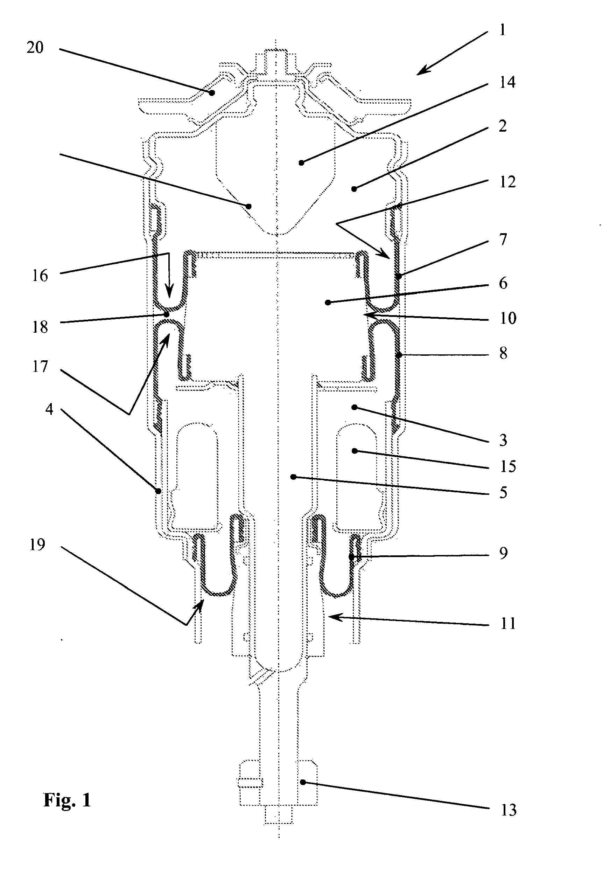

Die Fig. 1 zeigt hierzu eine erfindungsgemäße Luftfeder- und Dämpfereinheit 1 für ein Fahrwerk eines luftgefederten Personenkraftwagens in einer Ausführung nach Anspruch 2. Die Luftfeder- und Dämpfereinheit weist zwei mit Druckluft gefüllte Arbeitsräume 2 und 3 auf. Die Druckluft wird über einen hier nicht näher dargestellten Kompressor, über zugehörige Ventile und Leitungen in bekannter Weise in die Arbeitsräume gefördert und kann ebenfalls über dieses System abgelassen werden. Üblicherweise besteht ein Luftfeder- oder Niveauregelsystem aus Druckluftanlage / Druckluftversorgung und vier Luftfedermodulen, nämlich für jedes Rad eines, und wird insgesamt über eine Steuerungseinrichtung geregelt.

Die Arbeitsräume 2 und 3 sind in einem gemeinsamen topfförmigen, hier zylindrisch ausgebildeten Gehäuse 4 angeordnet und durch einen am Kopfende einer Kolbenstange 5 befindlichen, rotationssymmetrisch ausgebildeten Kolben 6 getrennt. Der Kolben 6 ist innerhalb des zylindrischen Gehäuses 4 axial beweglich. Innerhalb des Kolbens 6 sind hier nicht näher dargestellte steuerbare Drosselventile angeordnet, über die die beiden Arbeitsräume 2 und 3 verbunden sind. Der Kolben 6 und die Kolbenstange 5 werden jeweils durch Rollbälge 7, 8 und 9 innerhalb des zylindrischen Gehäuses abgedichtet und geführt. Die Außenflächen 10 und 11 des Kolbens und der Kolbenstange sowie die Innenfläche 12 des Zylinders sind jeweils über einen für das Abrollen der Rollbälge erforderlichen Bereich als rotationssymmetrische Abrollkonturen ausgebildet.

Ein zwischen dem Ende des zylindrischen Gehäuses und dem unteren Anschlußpunkt 13 zum Fahrwerk befindlicher Faltenbalg zum Schutz gegen Umgebungsbedingungen ist hier nicht näher dargestellt.

Die Luftfeder- und Dämpfereinheit weist weiterhin federnd ausgebildete Anschläge 14 und 15 auf, die bei entsprechender Belastung in der Druck- oder in der Zugstufenendlage den Kolbenweg / Federweg begrenzen, damit kein metallischer Kontakt entsteht.

Der zwischen den Rollfalten 16 und 17 der Rollbälge 7 und 8 befindliche ringförmige Bereich wird über hier nicht näher dargestellte Kanäle mit einer inkompressiblen Glycol-Wasser-Mischung als Stützmedium 18 befüllt. Dies führt dazu, dass die Druckdifferenz zu den durch die Rollbälge 7 und 8 abgedichteten Arbeitsräumen 2 und 3 im Bereich der hoch beanspruchten Rollfalten 16 und 17 verringert wird. Dies führt dann zu einer deutlichen Komfortverbesserung durch Harshness-Reduktion, wobei trotzdem die Führungseigenschaften im Hinblick auf Querkräfte durch den dritten Rollbalg 9 und der dortige Rollfalte 19 erhalten bleiben.

Karosserieseitig ist die Luftfeder- und Dämpfereinheit über ein Federbein-Kopflager 20 mit dem Fahrzeug in bekannter Weise verbunden.

### Bezugszeichenliste

### (Teil der Beschreibung)

- 1: Luftfeder- und Dämpfereinheit
- 2: Arbeitsraum (Dämpferraum)
- 3: Arbeitsraum (Federraum)
- 4: Zylindrisches Gehäuse
- 5: Kolbenstange
- 6: Kolben
- 7 - 9: Rollbalg
- 10 - 12: Fläche mit Abrollkontur
- 13: Anschlußpunkt
- 14: Federnder Anschlag
- 15: Federnder Anschlag
- 16: Rollfalte
- 17: Rollfalte
- 18: Stützmedium
- 19: Rollfalte
- 20: Federbein-Kopflager

## Patentansprüche

1. Luftfeder- und Dämpfereinheit für Fahrzeuge, welche mindestens zwei mit Druckluft gefüllte Arbeitsräume (2,3) aufweist, die jeweils mindestens teilweise durch bewegliche Wände in Form von Rollbälgen (7, 8) begrenzt werden, bei welcher die Rollbälge unter Bildung einer Rollfalte (16,17) mindestens teilweise auf den Konturen rotationssymmetrischer Körper abrollen und bei welcher die Arbeitsräume untereinander über durchströmbare Drosselventile verbunden sind, wobei die Luftfeder- und Dämpfereinheit ein gegen den Umgebungsdruck abgedichtetes Gehäuse (4) aufweist, wobei beide Arbeitsräume (2, 3) innerhalb eines Gehäuses (4) angeordnet und durch einen innerhalb des Gehäuses beweglichen und am Kopfende einer Kolbenstange (5) befindlichen Kolben (6) getrennt sind, wobei zwischen Kolben (6) und Gehäuse (4) ein zur Kolbenvorderseite geöffneter erster Rollbalg (7) sowie ein zur Kolbenrückseite geöffneter zweiter Rollbalg (8) angeordnet sind, und wobei der dem jeweiligen Arbeitsraum (2, 3) abgewandte Bereich (18) zwischen den Rollfalten (16, 17) der Rollbälge (7, 8) mit einem als Stützmedium (18) dienenden Druckmedium befüllt ist, **dadurch gekennzeichnet, dass** das Stützmedium (18) im Wesentlichen inkompressibel ist.

2. Luftfeder- und Dämpfereinheit nach Anspruch 1, **dadurch gekennzeichnet, dass** das Stützmedium (18) ein Gemisch aus mehreren inkompressiblen Medien ist.

3. Luftfeder- und Dämpfereinheit nach Anspruch 2, **dadurch gekennzeichnet, dass** das Stützmedium (18) ein Glykol-Wasser-Gemisch ist.

4. Luftfeder- und Dämpfereinheit nach Anspruch 1 bis 3, **dadurch gekennzeichnet, dass** das Stützmedium (18) Volumenanteile eines kompressiblen Mediums aufweist.

5. Luftfeder- und Dämpfereinheit nach Anspruch 1 bis 4, **dadurch gekennzeichnet, dass** das Stützmedium (18) aus einem Gemisch von Medien mit unterschiedlichen Kompressions-Moduli ist, welches unter Druck einen Phasenübergang durchläuft.

6. Luftfeder- und Dämpfereinheit nach Anspruch 1 bis 5, **dadurch gekennzeichnet, dass** das Stützmedium (18) als Schmier- oder Gleitmittel ausgebildet ist.

7. Luftfeder- und Dämpfereinheit nach Anspruch 1 bis 6, **dadurch gekennzeichnet, dass** das Stützmedium (18) als Korrosionsschutzmittel ausgebildet ist.

8. Luftfeder- und Dämpfereinheit nach Anspruch 1 bis 7, **dadurch gekennzeichnet, dass** bei mit Druckluft beaufschlagten Arbeitsräumen das Stützmedium im Befüllzustand (18) drucklos ist.

9. Luftfeder- und Dämpfereinheit nach Anspruch 1 bis 8, **dadurch gekennzeichnet, dass** beide Arbeitsräume (2, 3) innerhalb eines gemeinsamen topfförmigen rotationssymmetrischen Gehäuses (4) übereinander angeordnet sind, und wobei der Bereich zwischen den Rollfalten (16, 17) der Rollbälge (7, 8) mit Stützmedium (18) befüllt ist.

10. Luftfeder- und Dämpfereinheit nach Anspruch 9, **dadurch gekennzeichnet, dass** zwischen Kolbenstange (5) und rotationssymmetrischem Gehäuse (4) ein vom Kolben (6) beabstandeter dritter zur Kolbenrückseite geöffneter Rollbalg (9) angeordnet ist.

11. Luftfeder- und Dämpfereinheit nach Anspruch 1 bis 10, **dadurch gekennzeichnet, dass** das topfförmige rotationssymmetrische Gehäuse (4) vorzugsweise im oberen Bereich karosseriefest und die Kolbenstange (5) im unteren Bereich an einer Radaufhängung befestigbar sind.

## Claims

1. Air spring and damper unit for vehicles, which has at least two compressed-air-filled working chambers (2, 3) which are each delimited at least partially by movable walls in the form of rolling bellows (7, 8), in which air spring and damper unit the rolling bellows roll, so as to form a roll fold (16, 17), at least partially on the contours of rotationally symmetrical bodies, and in which air spring and damper unit the working chambers are connected to one another by means of throttle valves which can be traversed by flow, with the air spring and damper unit having a housing (4) which is sealed off from ambient pressure, with the two working chambers (2, 3) being arranged within a housing (4) and being separated by a piston (6) which is movable within the housing and which is situated on the head end of a piston rod (5), with a first rolling bellows (7), which is open towards the piston front side, and a second rolling bellows (8), which is open towards the piston rear side, being arranged between the piston (6) and housing (4), and with the region (18), which faces away from the respective working chamber (2, 3), between the roll folds (16, 17) of the rolling bellows (7, 8) being filled with a pressure medium which serves as a support medium (18), **characterized in that** the support medium (18) is substantially incompressible.

2. Air spring and damper unit according to Claim 1, **characterized in that** the support medium (18) is a mixture of a plurality of incompressible media.

3. Air spring and damper unit according to Claim 2, **characterized in that** the support medium (18) is a glycol-water mixture.

4. Air spring and damper unit according to Claim 1 to 3, **characterized in that** the support medium (18) has a volume fraction of a compressible medium.

5. Air spring and damper unit according to Claim 1 to 4, **characterized in that** the support medium (18) is a mixture of media with different bulk moduli which undergoes a phase change under pressure.

6. Air spring and damper unit according to Claim 1 to 5, **characterized in that** the support medium (18) is in the form of a lubricant or anti-friction agent.

7. Air spring and damper unit according to Claim 1 to 6, **characterized in that** the support medium (18) is in the form of a corrosion prevention agent.

8. Air spring and damper unit according to Claim 1 to 7, **characterized in that**, when the working chambers are charged with compressed air, the support medium (18) in the filled state is unpressurized.

9. Air spring and damper unit according to Claim 1 to 8, **characterized in that** the two working chambers (2, 3) are arranged one above the other within a common pot-shaped rotationally symmetrical housing (4), and with the region between the roll folds (16, 17) of the rolling bellows (7, 8) being filled with support medium (18).

10. Air spring and damper unit according to Claim 9, **characterized in that** a third rolling bellows (9), which is spaced apart from the piston (6) and is open towards the piston rear side, is arranged between the piston rod (5) and the rotationally symmetrical housing (4).

11. Air spring and damper unit according to Claim 1 to 10, **characterized in that** the pot-shaped, rotationally symmetrical housing (4) can be fastened, preferably in the upper region, so as to be fixed with respect to the body, and the piston rod (5) can be fastened, in the lower region, to a wheel suspension.

## Revendications

1. Unité de suspension et d'amortissement pneumatique pour véhicules, qui présente au moins deux espaces de travail (2, 3) remplis d'air comprimé et délimités chacun au moins en partie par des parois mobiles qui présentent la forme de soufflets déroulants (7, 8),
les soufflets déroulants se déroulant au moins en partie sur les contours de corps à symétrie de rotation en formant un pli de déroulement (16, 17),
les espaces de travail étant reliés l'un à l'autre par des soupapes d'étranglement aptes à être traversées,
l'unité de suspension et d'amortissement pneumatique présentant un boîtier (4) séparé hermétiquement de la pression ambiante,
les deux espaces de travail (2, 3) étant disposés à l'intérieur d'un boîtier (4) et étant séparés par un piston (6) mobile à l'intérieur du boîtier et situé à l'extrémité de tête d'une tige de piston (5),
un premier soufflet déroulant (7) ouvert en direction du côté avant du piston et un deuxième soufflet déroulant (8) ouvert vers le côté arrière du piston étant disposés entre le piston (6) et le boîtier (4),
la partie (18) située entre les plis de déroulement (16, 17) des soufflets déroulants (7, 8) et non tournée vers l'espace de travail (2, 3) respectif étant remplie d'un fluide sous pression qui sert de fluide de soutien (18),
**caractérisée en ce que**
le fluide de soutien (18) est essentiellement incompressible.

2. Unité de suspension et d'amortissement pneumatique selon la revendication 1, **caractérisée en ce que** le fluide de soutien (18) est un mélange de plusieurs fluides incompressibles.

3. Unité de suspension et d'amortissement pneumatique selon la revendication 2, **caractérisée en ce que** le fluide de soutien (18) est un mélange de glycol et d'eau.

4. Unité de suspension et d'amortissement pneumatique selon les revendications 1 à 3, **caractérisée en ce qu'**une partie du volume du fluide de soutien (18) est formée d'un fluide compressible.

5. Unité de suspension et d'amortissement pneumatique selon les revendications 1 à 4, **caractérisée en ce que** le fluide de soutien (18) est constitué d'un mélange de fluides qui présentent différents modules de compression et qui subissent une transition de phase sous l'action d'une pression.

6. Unité de suspension et d'amortissement pneumatique selon les revendications 1 à 5, **caractérisée en ce que** le fluide de soutien (18) est configuré comme agent lubrifiant ou de glissement.

7. Unité de suspension et d'amortissement pneumatique selon les revendications 1 à 6, **caractérisée en ce que** le fluide sous pression (18) est configuré comme agent de protection contre la corrosion.

8. Unité de suspension et d'amortissement pneumatique selon les revendications 1 à 7, **caractérisée en ce qu'**à l'état rempli (18), le fluide de soutien n'est pas comprimé lorsque les chambres de travail sont alimentées en air comprimé.

9. Unité de suspension et d'amortissement pneumatique selon les revendications 1 à 8, **caractérisée en ce que** les deux espaces de travail (2, 3) sont disposés l'un au-dessus de l'autre à l'intérieur d'un boîtier (4) commun, en forme de chapeau à symétrie de rotation et dans lequel la partie située entre les plis de déroulement (16, 17) des soufflets déroulants (7, 8) est remplie de fluide de soutien (18).

10. Unité de suspension et d'amortissement pneumatique selon la revendication 9, **caractérisée en ce qu'**un troisième soufflet déroulant (9) ouvert en direction de l'arrière du piston est disposé à distance du piston (6) entre la tige du piston (5) et le boîtier (4) à symétrie de rotation.

11. Unité de suspension et d'amortissement pneumatique selon les revendications 1 à 10, **caractérisée en ce que** la partie supérieure du boîtier (4) en forme de chapeau et à symétrie de rotation peut être fixée de préférence à la carrosserie et la partie inférieure de la tige du piston (5) à la suspension d'une roue.
